(19) Europäisches Patentamt
European Patent Office
Office européen des brevets

(11) **EP 1 929 262 B1**

(12) **EUROPÄISCHE PATENTSCHRIFT**

(45) Veröffentlichungstag und Bekanntmachung des Hinweises auf die Patenterteilung:
**21.01.2009  Patentblatt 2009/04**

(21) Anmeldenummer: **06791365.7**

(22) Anmeldetag: **12.09.2006**

(51) Int Cl.:
*G01K 13/02* (2006.01)    *G01N 27/07* (2006.01)

(86) Internationale Anmeldenummer:
**PCT/DE2006/001590**

(87) Internationale Veröffentlichungsnummer:
**WO 2007/036195 (05.04.2007 Gazette 2007/14)**

(54) **ANORDNUNG ZUR MESSUNG DER LOKALEN ELEKTRISCHEN IMPEDANZ UND DER TEMPERATUR IN FLUIDEN**

ASSEMBLY FOR MEASURING THE LOCAL ELECTRIC IMPEDANCE AND TEMPERATURE OF FLUIDS

ENSEMBLE POUR MESURER L'IMPEDANCE ELECTRIQUE LOCALE ET LA TEMPERATURE DANS DES FLUIDES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.09.2005  DE 102005046662**

(43) Veröffentlichungstag der Anmeldung:
**11.06.2008  Patentblatt 2008/24**

(73) Patentinhaber: **Forschungszentrum Dresden - Rossendorf e.V.**
**01328 Dresden (DE)**

(72) Erfinder:
• **SCHLEICHER, Eckhard**
  **01219 Dresden (DE)**
• **DA SILVA, Marco, Jose**
  **01099 Dresden (DE)**
• **HAMPEL, Uwe**
  **01324 Dresden (DE)**

(56) Entgegenhaltungen:
DE-A1- 10 012 938      US-A- 3 500 187
US-A- 3 657 640        US-A- 4 603 980

## Beschreibung

Die Erfindung betrifft eine Anordnung zur Messung der lokalen elektrischen Impedanz und der Temperatur in Fluiden oder mehrphasigen Stoffgemischen. Diagnostische Problemstellungen, bei denen die Struktur und das Temperaturprofil von Mehrphasenströmungen von Interesse sind, finden sich beispielsweise in verfahrenstechnischen und thermohydraulischen Anlagen, wo die Phasen- und Temperaturverteilung in einer Mehrphasenströmung wichtige Messparameter zur Beobachtung oder Kontrolle des Prozessablaufes oder zur Sicherheitsbewertung eines thermohydraulischen Systems darstellen.

In DE 32 01 799, DE 197 04 609 und DE 44 93 861 werden nadelförmige Sonden mit koaxialem Aufbau zur Messung der Leitfähigkeit beschrieben, die auf der Messung eines zwischen der metallischen Sondenspitze und der äußeren Bezugselektrode fließenden Gleich- oder Wechselstroms beruhen. Diese technischen Lösungen dienen nur der Erfassung der Leitfähigkeit, für die Bestimmung der Temperatur ist eine weitere Einrichtung notwendig.

In DE 100 12 938 wird eine nadelförmige Sonde beschrieben, bei der die zentrale Anregungselektrode als isoliertes Mantelthermoelement ausgeführt ist, wobei der elektrisch leitfähige Mantel des Thermoelements als Anregungselektrode für die Leitfähigkeitsmessung dient und die Temperatur als Differenzspannung zwischen den innerhalb des Mantelthermoelementes gegen die Mantelelektrode isoliert eingebrachten Thermodrähten gemessen wird.

Bei dieser Anordnung wird ein gemanteltes Thermoelement verwendet, um eine elektrische Isolation zwischen den beiden Messkreisen für Leitfähigkeit und Temperatur zur erreichen. Dies ist erforderlich, da eine Beaufschlagung der Thermodrähte mit einer Anregungsgleichspannung eine Störung der Temperaturspannung auf den Thermodrähten zur Folge hat, die mit einem Gleichstrommessverfahren nicht kompensiert werden kann. Eine Konsequenz dieser Anordnung ist eine erhöhte thermische Trägheit der Temperaturmesssonde infolge des Wärmewiderstandes des Isolationsmaterials zwischen Thermoelementmantel und Thermodrähten. Mit dieser technischen Lösung werden die Leitfähigkeit und die Temperatur nicht synchron bestimmt.

Aufgabe der vorliegenden Erfindung ist es, eine Anordnung zur schnellen und gleichzeitigen Messung der lokalen elektrischen Impedanz und der Temperatur in Fluiden vorzuschlagen.

Die Aufgabe wird durch die Merkmale des Anspruchs 1 gelöst. Ausgestaltungen der Erfindung sind in den Unteransprüchen ausgeführt.

Die Sonde besitzt eine für den Messzweck vorteilhafte koaxiale Struktur. Der aus den beiden Thermodrähten gebildete Mittelleiter wird von einer isolierenden Hülle umgeben. Darum ist eine Schirmelektrode angeordnet, die wiederum von einer isolierenden Hülle umgeben ist. Den radialen Abschluss bildet die äußere Bezugselektrode. Als Thermoelement wird ein offenes oder ein direktes Thermoelement verwendet. Das heißt, der Kontaktpunkt der Thermodrähte steht an der Sondenspitze in direktem thermischen und elektrischen Kontakt mit dem zu messenden Medium.

Neuartig an der der Erfindung zugrunde liegenden Anordnung ist die zur gleichzeitigen und schnellen Messung des Impedanz- und des Temperatursignals entwickelte Auswerteelektronik. Das Thermoelement dient dabei gleichzeitig zur Temperaturmessung als auch als Anregungselektrode für die Messung der elektrischen Impedanz. Zur Messung der elektrischen Impedanz wird einer der Thermodrähte mit einer Wechselspannung beaufschlagt und es wird der zwischen Thermokontakt und Bezugselektrode, durch das Außenmedium fließende Wechselstrom mit Hilfe eines Operationsverstärkers in ein Wechselspannungssignal gewandelt. Dieses Wechselspannungssignal wird anschließend mit Hilfe eines Amplituden-Phasen-Detektors ausgewertet. Die zeitlich langsam veränderliche Thermospannung, die sich zwischen den Thermodrähten aufbaut, wird durch einen Differenzverstärker von der hochfrequenten Anregungsspannung abgetrennt und vermessen. Damit ermöglicht die der Erfindung zugrunde liegende Anordnung eine echte parallele Messung der beiden Größen Impedanz und Temperatur innerhalb eines sehr kleinen Messvolumens bei gleichzeitig niedrigstmöglicher Trägheit des Thermoelementes.

Die Erfindung wird nachfolgend anhand eines Ausführungsbeispiels erläutert.

Die Zeichnung zeigt eine erfindungsgemäße Anordnung zur schnellen und gleichzeitigen Messung der lokalen elektrischen Impedanz und der Temperatur in Fluiden mit der für die Messung erforderlichen Messelektronik.

Die Anordnung besteht aus einer koaxial aufgebauten Nadelsonde mit einem im Inneren der Sonde angeordneten Thermoelement 1, dessen Thermokontaktpunkt 5 sich im Untersuchungsmedium befindet, einer um das Thermoelement 1 und gegen dieses mittels eines Isolators 4 elektrisch isoliert angeordneten hohlzylinderförmigen Schirmelektrode 2 und einer um die Schirmelektrode 2 und gegen diese mittels eines Isolators 4 elektrisch isoliert angeordneten hohlzylinderförmigen Bezugselektrode 3, sowie einer an diese Sonde angeschlossenen Messschaltung, bestehend aus einem Impedanzmesszweig mit einer Wechselspannungsquelle 7, einem Operationsverstärker 8 und einem Amplituden-Phasen-Detektor 9 sowie einem als Temperaturmesszweig wirkenden Differenzverstärker 10.

Bei der erfindungsgemäßen Anordnung ist einer der beiden Thermodrähte des Thermoelements 1 der Sonde mit dem invertierenden Eingang eines hochohmigen Operationsverstärkers 8 elektrisch verbunden, die Schirmelektrode 2 ist mit dem nichtinvertierenden Eingang des Operationsverstärkers 8 elektrisch verbunden und die Bezugselektrode 3 ist mit dem Massepotential der Schaltung elektrisch verbunden. Die Schirmelektrode 2 wird mit einer sinusförmigen Wechselspannung $u_w(t)=U_w\sin(\omega t)$ aus einer niederohmigen Wechselspannungsquelle 7 beaufschlagt. Aufgrund der Beschaltung des Operationsverstärkers mit einer Rückkoppelimpedanz $Z_f$ zwischen invertierendem Eingang und Ausgang entsteht ein virtueller Kurzschluss der Operationsverstärkereingänge, der dafür sorgt, dass die anregende Wechselspannung annähernd phasengleich auf der Schirmelektrode **2** und dem Thermoelement **1** anliegt. Zwischen dem Thermoelemement **1** und der Bezugselektrode **3** wird ein elektrisches Wechselfeld ausgeprägt, wobei sich die Feldlinien **6** wie gewünscht an der Sondenspitze um den Thermokontakt **5** konzentrieren, wohingegen die Schirmelektrode **2** für eine Verdrängung der Feldlinien **6** aus dem Sondeninneren bzw. von der Sondengrenzfläche an der Sondenspitze sorgt. Mit der elektrischen Impedanz $Z_M$ der Umgebung der Sondenspitze und der Impedanz $Z_f$ im Gegenkopplungszweig des Operationsverstärkers **8** ergibt sich das komplexe Spannungssignal

$$U_A\,'(j\omega) = \left(1 + \frac{Z_f(j\omega)}{Z_M(j\omega)}\right) U_W(j\omega)$$

am Ausgang des Operationsverstärkers **8**. Durch einen hinter dem Ausgang des Operationsverstärkers **8** angeordneten Amplituden-Phasen-Detektor **9** werden die Phase und die Amplitude des Differenzsignals $U_A(j\omega)$-$U_W(j\omega)$ gemessen. Dabei ist dem Fachmann geläufig, dass die Bestimmung der Vektorkomponenten des komplexen Signals $U_A(j\omega)$-$U_W(j\omega)$ neben der Messung von Amplitude und Phase mit Hilfe eines elektronischen Amplitude-Phasen-Detektors auch mit Hilfe eine I/Q-Demodulators (Real-und Imaginärteil des komplexen Signals) oder per softwarebasierter Fourieranalyse des hinreichend schnell mit einem Analog-Digital-Umsetzer abgetasteten Differenzsignals möglich ist.

Für den Fall einer reinen Leitfähigkeitsmessung kann der Amplituden-Phasen-Detektor **9** durch einen Spitzen- oder Effektivwertdetektor (z. B. Synchrondemodulator oder Gleichrichter) ersetzt werden, da in diesem Fall der elektrische Widerstand des Untersuchungsmediums allein aus der Amplitude des Spannungssignals $U_A$ am Operationsverstärkerausgang bestimmt werden kann.

Aus der erfindungsgemäßen Anordnung ergeben sich für die mit den beiden Thermodrähten des Thermoelements 1 elektrisch verbundenen Punkte 1 und 2 am Eingang der Temperaturmessschaltung folgende Spannungen:

$$\text{Punkt 1:} \qquad u_1(t) = U_w \sin(\omega t),$$

$$\text{Punkt 2:} \qquad u_2(t) = U_w \sin(\omega t + \varphi) + U_T(T).$$

Am Punkt 1 liegt die sinusförmige Anregungsspannung des Impedanzmesskreises direkt an. Am Punkt 2 erscheint diese Spannung mit einer durch die Geometrie, Kapazitäten und Induktivitäten der Drähte und Leitungen bestimmten Phasenverschiebung $\varphi$ und ist zusätzlich noch von der Temperaturgleichspannung $U_T(T)$ des Thermoelements **1** überlagert. Aufgabe der Messschaltung des Temperaturmesszweiges ist die selektive Messung des Gleichspannungssignals $U_T(T)$. Dazu ist der Gleichanteil des Summensignals vom Wechselanteil geeignet abzutrennen. Dazu wird die Differenzspannung der Thermodrähte mit Hilfe eines Differenzverstärkers **10** mit hoher Gleichtaktunterdrückung verstärkt. Sind die Eingangssignale geringfügig in ihrer Phase verschoben, so bleibt dem Ausgangssignal des Differenzverstärkers **10** noch eine residuale Wechselspannung aufgeprägt. Dem Fachmann ist geläufig, dass diese mit Hilfe folgender Maßnahmen eliminiert werden kann:

1. Nachschalten eines hinreichend dimensionierten Tiefpassfilters am Ausgang des Differenzverstärkers **10**;
2. Vorschalten eines elektrischen Phasenschiebers zur Korrektur der Phasenlage des Signals um den Betrag $\varphi$ vor einen Eingang des Differenzverstärkers **10**;
3. Vorschalten von jeweils einem hinreichend dimensionierten Tiefpassfilter vor die beiden Eingänge des Differenzverstärkers **10**;
4. Überbrückung der Eingänge des Differenzverstärkers **10** mit einem hinreichend dimensionierten Wechselstromkurzschluss (z. B. Kondensator)
5. hinreichend schnelle Abtastung des Ausgangssignals des Differenzverstärkers **10** mit Hilfe eines Analog-Digital-Wandlers und digitale Tiefpassfilterung des abgetasteten Signals
6. hinreichend schnelle Abtastung der Spannungssignale an den Thermodrähten von Thermoelement 1 mit Hilfe eines Analog-Digital-Wandlers mit hochohmigen Eingängen und anschließende digitale Subtraktion und anschließende digitale Tiefpassfilterung oder digitale Tiefpassfilterung und anschließende digitale Subtraktion der abgetasteten Signale.

Weiterhin ist sind dem Fachmann folgende Sachverhalte geläufig:

1. Zur Berechnung der tatsächlichen Temperaturspannung des Thermokontaktes **5** an der Sondenspitze aus der ermittelten Temperaturspannung $U_T$ ist eine Kalibrierung (Kaltstellenkompensation) erforderlich, die insbesondere die Temperaturspannung an weiteren Kontaktpunkten der Thermodrähte des Thermoelements **1** berücksichtigt.

2. Die Frequenz $\omega$ des Modulationssignals ist entsprechend den Erfordernissen an die Abtastrate von Impedanz- und Temperatursignal zu wählen. Die Schaltung ist, dann entsprechend der gewählten Modulationsfrequenz zu dimensionieren und um entsprechende Signalverarbeitungselektronik, wie Anti-Alias-Filter, Sampling&Hold-Stufen, Analog-Digital-Wandler und Controllerbausteine, zu ergänzen.

3. In einigen Anwendungsfällen kann es vorteilhaft sein, die Messung der elektrischen Impedanz an der Sondenspitze frequenzabhängig durchzuführen. Dazu muss die Wechselspannungsquelle 7 derart ausgeführt werden, dass sie Wechselspannungen verschiedener Frequenzen erzeugen kann.

**Anordnung zur Messung der lokalen elektrischen Impedanz und der Temperatur in Fluiden**

**Bezugszeichenliste**

**1** -     Thermoelement
**2 -**     Schirmelektrode
**3 -**     Bezugselektrode
**4 -**     Isolator
**5 -**     Thermokontaktpunkt
**6 -**     Feldlinien des elektrischen Feldes
**7 -**     Wechselspannungsquelle
**8 -**     Operationsverstärker
**9 -**     Amplituden-Phasen-Detektor
**10 -**    Differenzverstärker

**Patentansprüche**

**1.**  Anordnung zur Messung der lokalen elektrischen Impedanz und der Temperatur in Fluiden, bestehend aus einer koaxial aufgebauten Nadelsonde aus einem im Inneren der Sonde angeordneten Thermoelement **(1),** einer um das Thermoelement **(1)** und gegen dieses mittels eines Isolators **(4)** elektrisch isoliert angeordneten hohlzylinderförmigen Schirmelektrode **(2)** und einer um die Schirmelektrode **(2)** und gegen diese mittels eines Isolators **(4)** elektrisch isoliert angeordneten hohlzylinderförmigen Bezugselektrode **(3),** sowie einer an diese Sonde angeschlossenen Messschaltung, bestehend aus einem Impedanzmesszweig und einem Temperaturmesszweig mit einer Wechselspannungsquelle **(7), dadurch gekennzeichnet, dass**

- das Thermoelement als offenes oder direktes Thermoelement ausgeführt ist, in dem der Thermokontaktpunkt **(5)** der beiden Drähte des Thermoelementes **(1)** an der Spitze der Sonde mit dem Außenmedium in direktem thermischen und elektrischen Kontakt steht oder das Thermoelement **(1)** über einen geschlossenen Metallmantel verfügt und der Thermokontaktpunkt **(5)** der beiden Drähte des Thermoelementes **(1)** an der Spitze der Sonde mit dem Mantel des Thermoelementes in direktem thermischen und elektrischen Kontakt steht,
- die Schirmelektrode **(2)** und der nichtinvertierende Eingang eines Operationsverstärkers **(8)** elektrisch mit einer Wechselspannungsquelle **(7)** verbunden sind und damit eine Wechselspannung $U_W$ auf die Schirmelektrode **(2)** aufgeprägt wird,
- einer der Thermodrähte des Thermoelements **(1)** mit dem invertierenden Eingang des Operationsverstärkers **(8)** im Impedanzmesszweig elektrisch verbunden ist, so dass die an der Schirmelektrode **(2)** und am nichtinvertierenden Eingang des Operationsverstärker **(8)** anliegende Wechselspannung über den virtuellen Kurzschluss am Operationsverstärker **(8)** auf die Drähte des Thermoelements **(1)** aufgeprägt wird,

- der Ausgang des Operationsverstärkers elektrisch mit einem Amplituden-Phasen-Detektor **(9)** verbunden ist, durch welchen die Amplitude und Phase des Differenzsignals $U_W(j\omega)$-$U_A(j\omega)$, wobei $U_A$ das am Ausgang des Operations verstärkers anliegende Spannungssignal ist, in einer für die Weiterverarbeitung geeigneten Form erfasst wird,

- die beiden Thermodrähte mit den Eingängen eines Differenzverstärkers **(10)** im Temperaturmesszweig elektrisch verbunden sind, so dass der Differenzverstärker **(10)** die zwischen den beiden Thermodrähten des Thermoelements **(1)** anliegende Temperaturgleichspannung an seinem Ausgang $U_T$ verstärkt wiedergibt.

**2.** Anordnung nach Anspruch 1, **dadurch gekennzeichnet, dass** dem Ausgang des Operationsverstärkers **(8)** ein I/Q-Demodulator nachgeschaltet ist, der den Real- und den Imaginärteil des Wechselspannungssignals als Messwerte ausgibt.

**3.** Anordnung nach Anspruch 1, **dadurch gekennzeichnet, dass** der Ausgang des Operationsverstärkers **(8)** mit einer Analog-Digital-Wandler verbunden ist.

**4.** Anordnung nach Anspruch 1, **dadurch gekennzeichnet, dass** der Ausgang des Operationsverstärkers **(8)** mit einem Effektivwertdetektor oder Hüllkurvendetektor verbunden ist, mit welchem nur das Amplitudensignal aus dem Modulationssignal des Impedanzmesskreises extrahiert wird.

**5.** Anordnung nach Anspruch 1, **dadurch gekennzeichnet, dass** die Eingänge des Differenzverstärkers **(10)** durch einen Kondensator oder einen anderen Wechselstromkurzschluss verbunden sind.

**6.** Anordnung nach Anspruch 1, **dadurch gekennzeichnet, dass** jeder der beiden Drähte des Thermoelements **(1)** elektrisch mit dem Eingang jeweils eines Tiefpassfilters verbunden ist und die Ausgänge der beiden Tiefpassfilter jeweils mit den Eingängen des Differenzverstärkers **(10)** elektrisch verbunden sind.

**7.** Anordnung nach Anspruch 1, **dadurch gekennzeichnet, dass** mindestens einer der beiden Thermodrähte des Thermoelements **(1)** elektrisch mit dem Eingang eines elektrischen Phasenschiebers verbunden ist und der Ausgang des Phasenschieber mit einem Eingang des Differenzverstärkers **(10)** elektrisch verbunden ist.

**Claims**

**1.** Arrangement for measuring the local electrical impedance and temperature of fluids, comprising a coaxial needle probe, which comprises a thermocouple (1) which is arranged inside the probe, a hollow-cylindrical shielding electrode (2) which is arranged around the thermocouple (1) and is electrically insulated from the latter by means of an insulator (4) and a hollow-cylindrical reference electrode (3) which is arranged around the shielding electrode (2) and is electrically insulated from the latter by means of an insulator (4), and a measuring circuit which is connected to this probe and comprises an impedance measuring branch and a temperature measuring branch with an AC voltage source (7), **characterized in that**

- the thermocouple is in the form of an open or direct thermocouple in which the thermal contact point (5) of the two wires of the thermocouple (1) is in direct thermal and electrical contact with the external medium at the tip of the probe, or the thermocouple (1) has a closed metal casing and the thermal contact point (5) of the two wires of the thermocouple (1) is in direct thermal and electrical contact with the casing of the thermocouple at the tip of the probe,

- the shielding electrode (2) and the noninverting input of an operational amplifier (8) are electrically connected to an AC voltage source (7) and an AC voltage $U_W$ is thus impressed on the shielding electrode (2),

- one of the thermowires of the thermocouple (1) is electrically connected to the inverting input of the operational amplifier (8) in the impedance measuring branch, with the result that the AC voltage applied to the shielding electrode (2) and to the noninverting input of the operational amplifier (8) is impressed on the wires of the thermocouple (1) by means of the virtual short circuit at the operational amplifier (8),

- the output of the operational amplifier is electrically connected to an amplitude/phase detector (9) which detects the amplitude and phase of the differential signal $U_W(j\omega)$ - $U_A(j\omega)$, where $U_A$ is the voltage signal applied to the output of the operational amplifier, in a form suitable for further processing,

- the two thermowires are electrically connected to the inputs of a differential amplifier (10) in the temperature measuring branch, with the result that the differential amplifier (10) reproduces the temperature DC voltage applied between the two thermowires of the thermocouple (1) in amplified form at its output $U_T$.

2. Arrangement according to Claim 1, **characterized in that** an I/Q demodulator which outputs the real and imaginary parts of the AC voltage signal in the form of measured values is connected downstream of the output of the operational amplifier (8).

3. Arrangement according to Claim 1, **characterized in that** the output of the operational amplifier (8) is connected to an analogue/digital converter.

4. Arrangement according to Claim 1, **characterized in that** the output of the operational amplifier (8) is connected to an RMS value detector or envelope curve detector which is used to extract only the amplitude signal from the modulation signal of the impedance measuring circuit.

5. Arrangement according to Claim 1, **characterized in that** the inputs of the differential amplifier (10) are connected by means of a capacitor or another AC short circuit.

6. Arrangement according to Claim 1, **characterized in that** each of the two wires of the thermocouple (1) is electrically connected to the input of a respective low-pass filter, and the outputs of the two low-pass filters are respectively electrically connected to the inputs of the differential amplifier (10).

7. Arrangement according to Claim 1, **characterized in that** at least one of the two thermowires of the thermocouple (1) is electrically connected to the input of an electrical phase shifter, and the output of the phase shifter is electrically connected to an input of the differential amplifier (10).

**Revendications**

1. Arrangement pour mesurer l'impédance électrique locale et la température dans des fluides, composé d'une sonde à aiguille à structure coaxiale constituée d'un thermocouple (1) disposé à l'intérieur de la sonde, d'une électrode de blindage (2) de forme cylindrique creuse disposée autour du thermocouple (1) et isolée électriquement par rapport à celui-ci au moyen d'un isolateur (4) et d'une électrode de référence (3) disposée autour de l'électrode de blindage (2) et isolée électriquement par rapport à celle-ci au moyen d'un isolateur (4), ainsi que d'un circuit de mesure raccordé à cette sonde, lequel est constitué d'une branche de mesure d'impédance et d'une branche de mesure de température avec une source de tension alternative (7), **caractérisé en ce que**

   - le thermocouple est réalisé sous la forme d'un thermocouple ouvert ou direct dans lequel le point de contact thermique (5) des deux fils du thermocouple (1) à la pointe de la sonde est en contact thermique et électrique direct avec le fluide extérieur ou alors le thermocouple (1) dispose d'une enveloppe métallique fermée et le point de contact thermique (5) des deux fils du thermocouple (1) à la pointe de la sonde est en contact thermique et électrique direct avec l'enveloppe du thermocouple,
   - l'électrode de blindage (2) et l'entrée non inverseuse d'un amplificateur opérationnel (8) sont reliées électriquement à une source de tension alternative (7) et la tension alternative $U_W$ est ainsi appliquée à l'électrode de blindage (2),
   - l'un des fils pour couple thermoélectrique du thermocouple (1) est relié électriquement à l'entrée inverseuse de l'amplificateur opérationnel (8) dans la branche de mesure d'impédance de telle sorte que la tension alternative présente sur l'électrode de blindage (2) et sur l'entrée non inverseuse de l'amplificateur opérationnel (8) soit appliquée aux fils du thermocouple (1) par le biais du court-circuit virtuel au niveau de l'amplificateur opérationnel (8),
   - la sortie de l'amplificateur opérationnel est reliée électriquement à un détecteur d'amplitude et de phase (9) par le biais duquel sont détectées l'amplitude et la phase du signal différentiel $U_W(j\omega)-U_A(j\omega)$, $U_A$ étant le signal de tension présent à la sortie de l'amplificateur opérationnel, sous une forme appropriée pour le traitement ultérieur, les deux fils pour couple thermoélectrique sont reliés électriquement aux entrées d'un amplificateur différentiel (10) dans la branche de mesure de température de sorte que l'amplificateur différentiel (10) restitue amplifiée à sa sortie $U_T$ la tension continue de température présente entre les deux fils pour couple thermoélectrique du thermocouple (1).

2. Arrangement selon la revendication 1, **caractérisé en ce qu'**à la suite de la sortie de l'amplificateur opérationnel (8) est branché un démodulateur I/Q qui délivre comme valeurs mesurées la partie réelle et imaginaire du signal de tension alternative.

3. Arrangement selon la revendication 1, **caractérisé en ce que** la sortie de l'amplificateur opérationnel (8) est reliée avec un convertisseur analogique/numérique.

4. Arrangement selon la revendication 1, **caractérisé en ce que** la sortie de l'amplificateur opérationnel (8) est reliée avec un détecteur de valeur efficace ou un détecteur de courbe d'enveloppe avec lequel seul le signal d'amplitude est extrait du signal de modulation du circuit de mesure d'impédance.

5. Arrangement selon la revendication 1, **caractérisé en ce que** les entrées de l'amplificateur différentiel (10) sont reliées par un condensateur ou un autre court-circuit pour courant alternatif.

6. Arrangement selon la revendication 1, **caractérisé en ce que** chacun des deux fils du thermocouple (1) est relié électriquement à l'entrée d'un filtre passe-bas respectif et les sorties des deux filtres passe-bas sont respectivement reliées électriquement aux entrées de l'amplificateur différentiel (10).

7. Arrangement selon la revendication 1, **caractérisé en ce qu'**au moins l'un des deux fils pour couple thermoélectrique du thermocouple (1) est relié électriquement à l'entrée d'un déphaseur électrique et la sortie du déphaseur est reliée électriquement à une entrée de l'amplificateur différentiel (10).

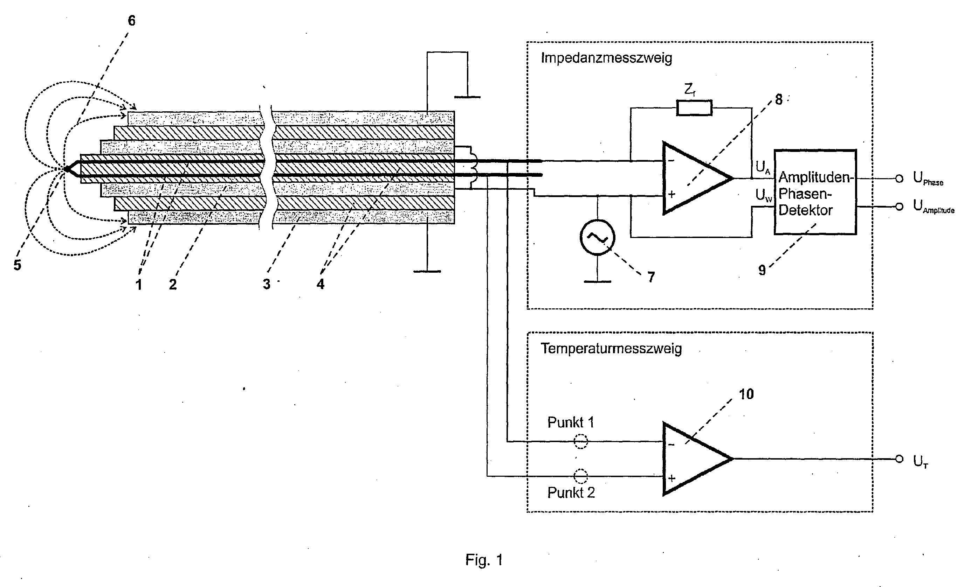

Fig. 1

EP 1 929 262 B1

**EP 1 929 262 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3201799
- DE 19704609
- DE 4493861
- DE 10012938